# EUROPEAN PATENT APPLICATION

(11) **EP 4 318 900 A1**
(43) Date of publication of application: **07.02.2024**
(21) Application number: 22780646.0
(22) Date of filing: 25.03.2022
(51) Int. Cl.: H02K 9/02, H02K 1/02, H02K 5/10, H02K 11/30, H02K 19/24, H02K 21/22

(54) **MOTOR, BLOWING DEVICE AND REFRIGERATION DEVICE**

(30) Priority: 29.03.2021 JP 2021054832
(71) Applicant: Daikin Industries, Ltd., Osaka-shi, Osaka 530-0001 (JP)
(72) Inventor: YANAGIDA, Yasuto, Osaka-shi, Osaka 530-8323 (JP); ASARI, Tsukasa, Osaka-shi, Osaka 530-8323 (JP); UEDA, Akane, Osaka-shi, Osaka 530-8323 (JP); KIDO, Naohiro, Osaka-shi, Osaka 530-8323 (JP); ASANO, Yoshinari, Osaka-shi, Osaka 530-8323 (JP); HIBINO, Hiroshi, Osaka-shi, Osaka 530-8323 (JP)
(74) Representative: Hoffmann Eitle
(86) International application number: PCT/JP2022/014707
(87) International publication number: WO 2022/210434

(57) **Abstract**

A motor 1 according to an embodiment of the present disclosure includes a rotor 10 configured to freely rotate around a rotation axis AX; and a stator 20 arranged inside the rotor 10 and including a stator unit 21 of a claw-pole type, the stator unit including a winding wire 212 that is annularly wound around the rotation axis AX and a stator core 211 provided so as to surround the winding wire, wherein the stator 20 includes an inner space 24A around the rotation axis AX and in communication with an outer side of the rotor 10, such that heat can be radiated to the inner space 24A.

## Description

### [Technical Field]

The present disclosure relates to a motor, a fan apparatus, and a refrigeration apparatus.

### [Background Art]

For example, a motor including a rotary shaft having a hollow structure is known (see Patent Document 1).

### [Citation List]

### [Patent Document]

(Patent document 1) WO 2018/025984

### [Summary of Invention]

### [Technical Problem]

However, in the case of an outer rotor type claw-pole motor as described in Patent Document 1, it is not possible to enhance the heat radiation effect of a stator arranged outside the rotary shaft in the radial direction only by making the rotary shaft of the rotor have a hollow structure.

An object of the present disclosure is to provide a technology for improving the cooling performance of an outer rotor type claw-pole motor.

### [Solution to Problem]

In an embodiment according to the present disclosure, there is provided
a motor including
a rotor configured to freely rotate around a rotation axis; and
a stator arranged inside the rotor and including a stator unit of a claw-pole type, the stator unit including a winding wire that is annularly wound around the rotation axis and a core provided so as to surround the winding wire, wherein
the stator includes an inner space around the rotation axis and in communication with an outer side of the rotor, such that heat can be radiated to the inner space.

According to the present embodiment, a technology for improving the cooling performance of an outer rotor type claw-pole motor can be provided.

Further, in the above embodiment, the motor may include
a shielding member configured to shield a space where the rotor and the stator face each other, and the inner space of the stator.

Thus, according to the present embodiment, foreign matter can be prevented from entering into the space where the rotor and the stator face each other.

Further, in the above embodiment,
the stator may include three or more of the stator units that are stacked in an axial direction of the rotation axis.

Thus, according to the present embodiment, the heat radiation effect of heat generated by each of the three or more stator units can be enhanced.

Further, in the above embodiment, the motor may include
a rotary shaft configured to freely rotate around the rotation axis and to rotate integrally with the rotor, wherein
the rotary shaft may have a hole that allows the outer side of the rotor to be in communication with the inner space of the stator.

Thus, according to the present embodiment, heat in the inner space of the stator can be radiated to the outside of the stator through the hole of the rotary shaft.

Further, in the above embodiment,
the rotary shaft may be rotatably supported by one supporting member provided on one end in an axial direction of the rotation axis, and one supporting member provided on another end in the axial direction of the rotation axis, and wherein
the rotary shaft may have the hole provided on the one end in the axial direction of the rotation axis, and may have an opening provided on the another end in the axial direction of the rotation axis that allows the inner space of the stator to be in communication with an external space.

Thus, according to the present embodiment, heat in the inner space of the stator can be radiated to the external space through the hole and the opening of the rotary shaft.

Further, in the above embodiment,
the rotary shaft may be rotatably supported by one supporting member provided on one end in an axial direction of the rotation axis, and
the rotary shaft may have an opening provided on another end in the axial direction of the rotation axis that allows the inner space of the stator to be in communication with an external space.

Thus, according to the present embodiment, heat in the inner space of the stator can be radiated to the external space through the opening of the rotary shaft.

Further, in the above embodiment, the motor may further include
a fan arranged in the inner space of the stator and configured to rotate integrally with the rotary shaft.

Thus, according to the present embodiment, the heat radiation property can be enhanced by increasing the flow rate of gas flowing in the inner space of the stator.

Further, in the above embodiment, the motor may further include
a heat radiation fin arranged on an inner peripheral surface facing the inner space of the stator.

Thus, according to the present embodiment, the heat radiation property can be enhanced by enlarging the surface area of the inner peripheral surface facing the inner space of the stator.

Further, in the above embodiment, the motor may further include
a fixing member configured to support the stator; and
a case attached to the fixing member to house a drive circuit configured to supply power to the winding wire, wherein
the fixing member and the case may each have an opening that allows the inner space of the stator to be in communication with an external space.

Thus, according to the present embodiment, heat in the inner space of the stator can be radiated to the external space through the respective openings of the fixing member and the case.

Further, in the above embodiment, the motor may further include
a fixing member configured to support the stator; and
a case attached to the fixing member to house a drive circuit configured to supply power to the winding wire, wherein
the fixing member may have an opening that pierces through the fixing member in a radial direction of the rotation axis to allow the inner space of the stator to be in communication with an external space of the stator.

Thus, according to the present embodiment, heat in the inner space of the stator can be radiated to the external space through the opening of the fixing member.

Further, in the above embodiment,
the core of the stator unit may be formed by using a compacted body formed by compressing magnetic powder.

Thus, according to the present embodiment, the heat of the core, which is liable to rise in temperature due to the use of the compacted body, can be radiated to the external space through the inner space of the stator.

Further, in an embodiment according to the present disclosure, there is provided
a fan apparatus including
an impeller configured to blow air by rotating; and
the above motor configured to rotatably drive the impeller.

According to the present embodiment, the cooling performance of an outer rotor type claw-pole motor used for the fan apparatus can be improved.

Further, in an embodiment according to the present disclosure, there is provided
a refrigeration apparatus including
the above fan apparatus.

According to the present embodiment, the cooling performance of an outer rotor type claw-pole motor used for the fan apparatus included in the refrigeration apparatus can be improved.

### [Brief Description of Drawings]

[FIG. 1] FIG. 1 is a perspective view illustrating an outline of a motor according to the present embodiment.
[FIG. 2] FIG. 2 is a perspective view illustrating an example of a configuration of a stator according to the present embodiment.
[FIG. 3] FIG. 3 is an exploded view illustrating an example of a configuration of a stator unit according to the present embodiment.
[FIG. 4] FIG. 4 is a vertical sectional view illustrating an example of a configuration of a motor according to the present embodiment.
[FIG. 5] FIG. 5 is a longitudinal perspective view of a motor according to the first embodiment.
[FIG. 6] FIG. 6 is a longitudinal perspective view illustrating an example of a configuration of a motor according to the second embodiment.
[FIG. 7] FIG. 7 is a longitudinal perspective view illustrating an example of the configuration of the motor according to the third embodiment.
[FIG. 8] FIG. 8 is a longitudinal perspective view illustrating an example of the configuration of the motor according to the fourth embodiment.
[FIG. 9] FIG. 9 is a longitudinal perspective view illustrating an example of the configuration of the motor according to the fifth embodiment.
[FIG. 10] FIG. 10 is a longitudinal perspective view illustrating an example of the configuration of the motor according to the sixth embodiment.
[FIG. 11] FIG. 11 is a schematic view illustrating the configuration of the refrigeration apparatus according to the present embodiment.
[FIG. 12] FIG. 12 is a longitudinal perspective view illustrating a modified example of the configuration of the motor according to the second embodiment.

### [Description of Embodiments]

Embodiments will be described below with reference to the drawings.

### [Basic configuration of motor 1]

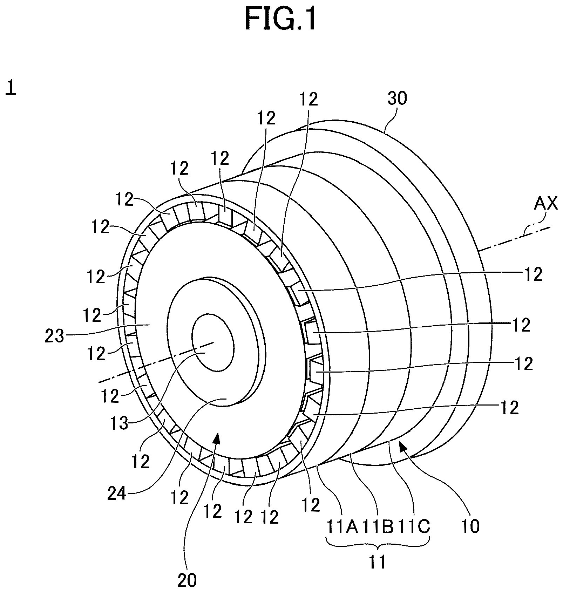

First, the basic configuration of a motor 1 according to the present embodiment will be described with reference to FIGS. 1 to 4.

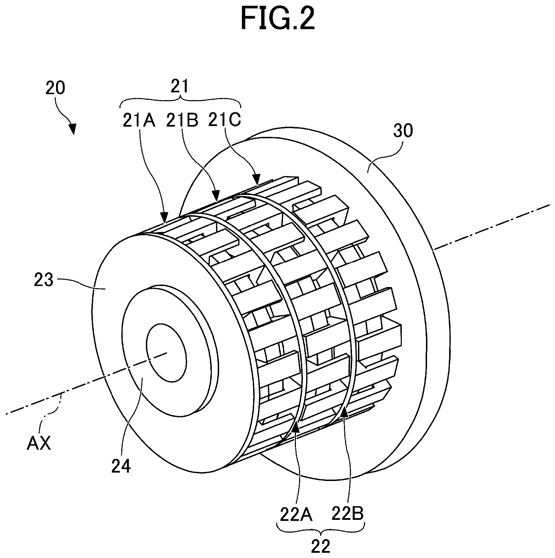

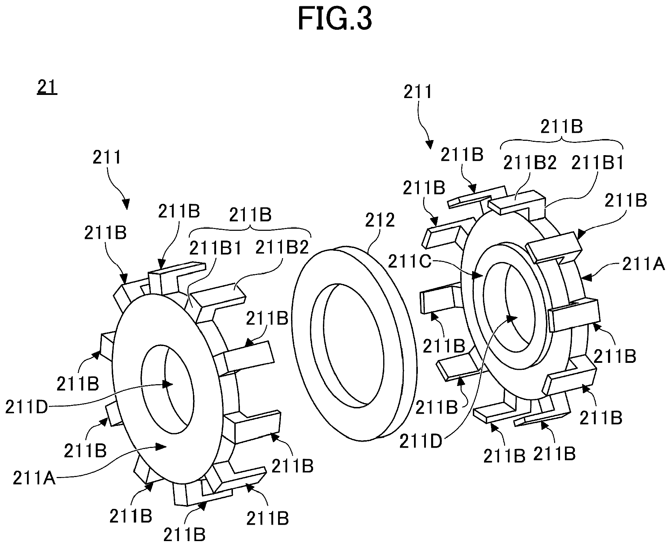

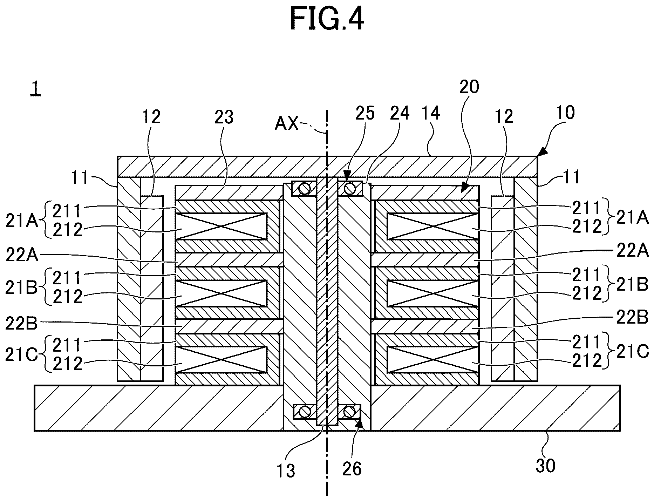

FIG. 1 is a perspective view illustrating an outline of the motor 1 according to the present embodiment. In FIG. 1, a coupling member 14 provided in a rotor 10 is not illustrated. FIG. 2 is a perspective view illustrating an example of the configuration of a stator 20 according to the present embodiment. In FIG. 2, the rotor 10 (a rotor core 11, a permanent magnet 12, a rotary shaft member 13, and the coupling member 14) is not illustrated. FIG. 3 is an exploded view illustrating an example of the configuration of a stator unit 21 according to the present embodiment. FIG. 4 is a longitudinal sectional view illustrating an example of the configuration of the motor 1 according to the present embodiment.

The motor 1 illustrated in FIGS. 1 to 4 is a so-called outer rotor type claw-pole motor. The motor 1 is driven by armature currents of multiple phases (in this example, three phases). The motor 1 is used for a fan apparatus, a refrigeration apparatus, etc.

As illustrated in FIGS. 1 to 4, the motor 1 includes the rotor 10, the stator 20, and a fixing member 30.

As illustrated in FIGS. 1 to 4, the rotor 10 is arranged outside the stator 20 in the radial direction of the motor 1 (hereinafter, simply "radial direction") and is configured to rotate about a rotation axis AX. The rotor 10 includes the rotor core 11, a plurality (in this example, 20 units) of the permanent magnets 12, and the rotary shaft member 13. The rotor 10 is sometimes referred to as a *"rotor"* (as represented by Japanese katakana characters).

The rotor core 11 has, for example, a substantially cylindrical shape and is arranged so that the rotation axis AX of the motor 1 and the cylindrical axis are substantially coincident. The rotor core 11 has a length substantially equivalent to that of the stator 20 in the axial direction of the motor 1 (hereinafter, simply "axial direction"). The rotor core 11 is formed of, for example, a steel plate, cast iron, or a compacted magnetic core. In the example illustrated in FIG. 1, the rotor core 11 is formed of a plurality of (in this example, three) rotor cores 11A to 11C stacked in the axial direction. However, the rotor core 11 may be formed of one member in the axial direction. The rotor core 11 is sometimes referred to as a *"rotor core"* (as represented by Japanese katakana characters).

The plurality of (in this example, 20 units) permanent magnets 12 are arranged at equal intervals in the circumferential direction on the inner peripheral surface of the rotor core 11. Each of the plurality of permanent magnets 12 is formed so as to exist between substantially one end and substantially the other end of the rotor core 11 in the axial direction. The permanent magnets 12 are, for example, neodymium sintered magnets or ferrite magnets.

Each of the plurality of permanent magnets 12 is magnetized with different magnetic poles at either end in the radial direction. The two permanent magnets 12 adjacent to each other in the circumferential direction, among the plurality of permanent magnets 12, are magnetized with different magnetic poles from each other, on the inside in the radial direction facing the stator 20. Therefore, the permanent magnets 12 magnetized with N poles on the inside in the radial direction and the permanent magnets 12 magnetized with S poles on the inside in the radial direction, are alternately arranged in the circumferential direction, outside the radial direction of the stator 20.

Each of the plurality of permanent magnets 12 may be formed of one magnet member in the axial direction, or a plurality of magnet members divided in the axial direction (for example, three corresponding to the number of members of the rotor core 11 to be stacked). In this case, the plurality of magnet members forming the permanent magnet 12 divided in the axial direction are all magnetized with the same magnetic pole on the inside in the radial direction facing the stator 20.

The plurality of permanent magnets 12 arranged in the circumferential direction may be replaced with a permanent magnet formed of one member in the circumferential direction, for example, an annular ring magnet or a plastic magnet that is magnetized with different magnetic poles alternately in the circumferential direction. In this case, the permanent magnet formed of one member in the circumferential direction may be formed of one member also in the axial direction, and may be formed of one member as a whole. The permanent magnet formed of one member in the circumferential direction may be divided into a plurality of members in the axial direction as in the case of the plurality of permanent magnets 12. When a plastic magnet formed of one member in the circumferential direction is adopted, the rotor core 11 may be omitted.

The rotary shaft member 13 has a substantially cylindrical shape, for example, and is arranged so that the rotation axis AX of the motor 1 and the cylindrical shaft center are substantially coincident. The rotary shaft member 13 is rotatably supported by bearings 25 and 26 (see FIG. 4) provided at both ends in the axial direction of an insertion member 24, for example. The insertion member 24 is fixed to the fixing member 30. Thus, the rotary shaft member 13 can rotate about the rotation axis AX with respect to the fixing member 30. For example, the rotary shaft member 13 is coupled to the rotor core 11 by the coupling member 14 (see FIG. 4) at the end opposite to the end on the fixing member 30 side of the motor 1 in the axial direction (hereinafter, conveniently described as the "leading end of the motor 1").

The coupling member 14 has, for example, a substantially circular disk shape that closes the open end of the substantially cylindrical shape of the rotor core 11. Thus, the rotor core 11 and the plurality of permanent magnets 12 fixed to the inner peripheral surface of the rotor core 11 can rotate about the rotation axis AX of the motor 1 with respect to the fixing member 30 in accordance with the rotation of the rotary shaft member 13.

As illustrated in FIGS. 1 to 4, the stator 20 is arranged radially inside the rotor core 11 and the permanent magnets 12 provided in the rotor 10. The stator 20 includes a plurality of (in this example, three) the claw-pole-shaped stator units 21, a plurality of (in this example, two) interphase members 22, an end member 23, and the insertion member 24. The stator 20 is sometimes referred to as a *"stator"* (as represented by Japanese katakana characters).

As illustrated in FIG. 3, the stator unit 21 includes a pair of stator cores 211 and a winding wire 212.

The two stator cores 211 are provided so as to surround the winding wire 212. The stator cores 211 are formed of, for example, compacted magnetic cores. The stator core 211 includes a yoke portion 211A, a plurality of claw magnetic poles 211B, a yoke portion 211C, and an insertion hole 211D. The pair of stator cores 211 is sometimes referred to as *"stator cores"* (as represented by Japanese katakana characters).

The yoke portion 211A has an annular shape as viewed in a axial direction and a predetermined thickness in the axial direction.

The plurality of claw magnetic poles 211B are arranged at equal intervals in the circumferential direction on the outer peripheral surface of the yoke portion 211A, and each of the claw magnetic poles 211B protrudes radially outward from the outer peripheral surface of the yoke portion 211A. The claw magnetic poles 211B include a claw magnetic pole portion 211B1 and a claw magnetic pole portion 211B2.

The claw magnetic pole portion 211B1 has a predetermined width and protrudes from the outer peripheral surface of the yoke portion 211A by a predetermined length.

The claw magnetic pole portion 211B2 projects from the tip of the claw magnetic pole portion 211B1 toward the other one of the two stator cores 211 by a predetermined length in the axial direction. For example, as illustrated in FIG. 3, the claw magnetic pole portion 211B2 may have a constant width regardless of the distance from the claw magnetic pole portion 211B1. For example, the claw magnetic pole portion 211B2 may have a tapered shape that narrows in width as the distance is further away from the claw magnetic pole portion 211B1 in the axial direction. Because the motor 1 has the claw magnetic pole portion 211B2, it is possible to secure a relatively wide opposing area between the magnetic pole surface of the claw magnetic pole 211B magnetized by the armature current of the winding wire 212 and the rotor 10. Therefore, the motor 1 can relatively increase the torque of the motor 1, thereby increasing the output of the motor 1. Note that the claw magnetic pole portion 211B2 may be omitted.

The yoke portion 211C is configured such that a portion near the inner peripheral surface of the yoke portion 211A projects toward the other one of the two stator cores 211 by a predetermined amount, and has, for example, an annular shape having an outer diameter smaller than that of the yoke portion 211A as viewed in the axial direction. Therefore, the two stator cores 211 come into contact with each other at the yoke portion 211C, and a space for accommodating the winding wire 212 is created between the two yoke portions 211A corresponding to the two stator cores 211.

The insertion member 24 is inserted into the insertion hole 211D. The insertion hole 211D is realized by the inner peripheral surfaces of the yoke portion 211A and the yoke portion 211C.

The winding wire 212 is annularly wound in the axial view. One end of the winding wire 212 is electrically connected to an external terminal, and the other end is electrically connected to a neutral point. The winding wire 212 is arranged between the two stator cores 211 (the yoke portions 211A) in the axial direction. The winding wire 212 is wound so that the inner peripheral part is radially outward from the yoke portion 211C of the pair of stator cores 211. The winding wire 212 is sometimes referred to as a "coil".

As illustrated in FIG. 2, the two stator cores 211 are combined so that the claw magnetic pole 211B of one stator core 211 and the claw magnetic pole 211B of the other stator core 211 are alternately arranged in the circumferential direction. When an armature current flows through the annular winding wire 212, the claw magnetic pole 211B formed on one of the two stator cores 211 and the claw magnetic pole 211B formed on the other are magnetized to magnetic poles different from each other. Thus, in the pair of stator cores 211, one claw magnetic pole 211B protruding from one stator core 211 has a magnetic pole different from the other claw magnetic pole 211B which is adjacent in the circumferential direction and which protrudes from the other stator core 211. Therefore, due to the armature current flowing in the winding wire 212, the claw magnetic pole 211B of the N pole and the claw magnetic pole 211B of the S pole are alternately arranged in the circumferential direction of the pair of stator cores 211.

As illustrated in FIGS. 2 and 4, the plurality of stator units 21 are stacked in the axial direction. The plurality of stator units 21 includes the stator units 21 corresponding to a plurality of phases (in this example, three phases). Specifically, the plurality of stator units 21 includes the stator unit 21A corresponding to the U phase, the stator unit 21B corresponding to the V phase, and the stator unit 21C corresponding to the W phase. The plurality of stator units 21 are stacked in the order of the stator unit 21A corresponding to the U phase, the stator unit 21B corresponding to the V phase, and the stator unit 21C corresponding to the W phase from the leading end of the motor 1. The stator units 21A to 21C are arranged so that the positions thereof in the circumferential direction differ from each other by 120° in electric angle.

The motor 1 may be driven by a two-phase armature current or by an armature current of four or more phases.

The interphase member 22 is provided between axially adjacent stator units 21 of different phases. The interphase member 22 is, for example, a nonmagnetic material. Thus, a predetermined distance can be secured between the two stator units 21 of different phases, and magnetic flux leakage between the two stator units 21 of different phases can be prevented. The interphase member 22 includes a UV interphase member 22A and a VW interphase member 22B.

The UV interphase member 22A is provided between the stator unit 21A of the U phase and the stator unit 21B of the V phase, which are adjacent in the axial direction. The UV interphase member 22A has, for example, a substantially cylindrical shape (substantially circular plate shape) having a predetermined thickness, and an insertion hole through which the insertion member 24 is inserted is formed in the center portion. The same may apply to the VW interphase member 22B.

The VW interphase member 22B is provided between the stator unit 21B of the V phase and the stator unit 21 C of the W phase, which are adjacent in the axial direction.

The end member 23 is provided at an end part on the leading end side of the motor 1 including the plurality of stator units 21 that are stacked. Specifically, the end member 23 is provided so as to contact an edge face of the stator unit 21A, on the side opposite to the side facing the stator unit 21B in the axial direction. The end member 23 has, for example, a substantially cylindrical shape (substantially circular plate shape) having a predetermined thickness, and an insertion hole through which the insertion member 24 is inserted is formed in the center portion. The end member 23 is, for example, a nonmagnetic material. Thus, magnetic flux leakage from the stator unit 21A (specifically, the stator core 211 on the leading end side of the motor 1) can be prevented.

In the insertion member 24, the end member 23, the stator unit 21A, the UV interphase member 22A, the stator unit 21B, the VW interphase member 22B, and the stator unit 21C are inserted in order from the leading end side of the motor 1, and the leading end is fixed to the fixing member 30. The insertion member 24 has, for example, a male screw portion at the leading end and is fixed to the fixing member 30 by being fastened to the corresponding female screw portion of the fixing member 30.

The insertion member 24 has, for example, a substantially cylindrical shape, and the rotary shaft member 13 is rotatably arranged in the hole portion realized by the inner peripheral surface. The bearings 25 and 26 rotatably supporting the rotary shaft member 13 are provided at both ends of the insertion member 24 in the axial direction.

The insertion member 24 has a head having an outer diameter relatively larger than the inner diameter of the insertion hole 211D of the stator unit 21 at the leading end of the motor 1. Thus, for example, the insertion member 24 is tightened to a certain extent to the fixing member 30, so that a force in the direction from the head toward the fixing member 30 in the axial direction can be applied to the end member 23. Therefore, the plurality of the stator units 21 (the stator units 21A to 21C) and the interphase member 22 (the UV interphase member 22A, the VW interphase member 22B) can be fixed to the fixing member 30 in the form of being sandwiched between the end member 23 and the fixing member 30. The strength of the compacted magnetic core is relatively low against tensile stress, while the strength against compressive stress is relatively high. Therefore, with the compressive stress being applied to the stator core 211 formed by the compacted magnetic core, the stator units 21A to 21C can be fixed to the fixing member 30.

The fixing member 30 has, for example, a substantially disk shape having an outer diameter larger than that of the rotor 10 (the rotor core 11) in the axial direction, and has a predetermined thickness in the axial direction. As illustrated in FIG. 4, the rotor 10 is rotatably supported on the fixing member 30 through the insertion member 24, and the stator 20 is fixed.

### [First embodiment]

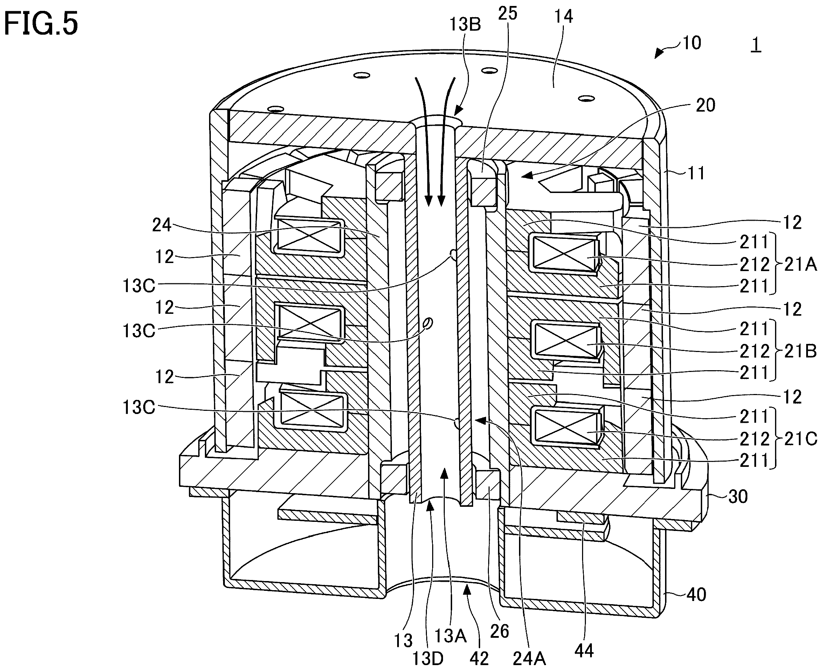

Next, a structure unique to the motor 1 according to the first embodiment will be described with reference to FIG. 5. FIG. 5 is a longitudinal perspective view of the motor 1 according to the first embodiment.

As illustrated in FIG. 5, in the motor 1 according to the first embodiment, the insertion member 24 of the stator 20 has a hollow structure, that is, the insertion member 24 has an inner space 24A around the rotation axis AX.

The rotary shaft member 13 of the rotor 10 is arranged in the inner space 24A. Both ends of the rotary shaft member 13 in the axial direction are rotatably supported by the bearings 25 and 26 (both are examples of "one support member") provided at both ends of the insertion member 24 in the axial direction. In the motor 1 according to the first embodiment, the inner space 24A of the insertion member 24 is in communication with the outside of the rotor 10.

Specifically, the rotary shaft member 13 arranged in the inner space 24A has a hollow structure. That is, the rotary shaft member 13 has an inner space 13A around the rotation axis AX.

The end of the rotary shaft member 13 on the side of the coupling member 14 has a hole 13B in communication with the outside of the rotor 10 and the inner space 13A.

A plurality of through holes 13C in communication with the inner side (the inner space 13A) and the outside (the inner space 24A) of the rotary shaft member 13, are formed in the wall portion of the rotary shaft member 13.

Thus, in the motor 1 according to the first embodiment, the inner space 24A is in communication with the outside of the rotor 10 through the through holes 13C, the inner space 13A, and the hole 13B of the rotary shaft member 13.

Therefore, in the motor 1 according to the first embodiment, as illustrated in FIG. 5, a gas flow path is formed from the outside of the rotor 10 to the inner space 24A, and the gas sucked in through the hole 13B of the rotary shaft member 13 flows through the inner space 24A of the insertion member 24, so that the insertion member 24 can be cooled from the inside.

In particular, the motor 1 according to the first embodiment is an outer rotor type claw-pole motor, and because the winding wire 212 is surrounded by the stator cores 211, the heat generated by the winding wire 212 is easily transmitted to the insertion member 24 through the stator cores 211, so that the heat generated by the winding wire 212 can be radiated more efficiently by cooling the insertion member 24.

The end of the rotary shaft member 13 on the side of the fixing member 30 has an opening 13D. The opening 13D is in communication with the external space. Thus, the rotary shaft member 13 is able to discharge the gas, which has been sucked in through the hole 13B and warmed in the inner space 24A by the heat generated by the stator 20, from the opening 13D to the external space. Therefore, the motor 1 according to the first embodiment can efficiently cool the insertion member 24 from the inside.

The motor 1 according to the first embodiment further includes a case 40. The case 40 is fixed, in the axial direction, to the surface on the opposite side to the surface on which the stator 20 of the fixing member 30 is fixed. The case 40 has a cylindrical shape with an outer diameter substantially equal to the outer diameter of the rotor 10. The case 40 has a hollow structure. A drive circuit 44 configured to supply power to the winding wire 212 is arranged inside the case 40. An opening 42 piercing the case 40 in the axial direction is formed in the central portion (around the rotation axis AX) of the case 40. The opening 42 is in communication with the opening 13D of the rotary shaft member 13. The inner diameter of the opening 42 is larger than that of the opening 13D of the rotary shaft member 13. Thus, the opening 42 does not prevent gas from being discharged from the opening 13D into the external space. In the motor 1 according to the first embodiment, gas flows through the opening 42, thereby cooling the case 40 and the drive circuit 44 provided inside the case 40.

In the motor 1 according to the first embodiment, the space where the rotor 10 (the inner peripheral surface of the permanent magnet 12) and the stator 20 (the outer peripheral surface of the stator core 211) face each other, and the inner space 24A of the stator 20, are shielded by the bearings 25 and 26 provided at both ends of the insertion member 24. That is, the bearings 25 and 26 function as "shielding members". Thus, the motor 1 according to the first embodiment can prevent foreign matter contained in the gas introduced into the inner space 24A, from entering the space where the rotor 10 (the inner peripheral surface of the permanent magnet 12) and the stator 20 (the outer peripheral surface of the stator core 211) face each other, while cooling the insertion member 24 from the inside by the gas introduced into the inner space 24A.

Further, the motor 1 according to the first embodiment has the inner space 24A separated from the stator 20 only by the insertion member 24 capable of heat transfer. That is, the motor 1 according to the first embodiment has no member having high thermal resistance such as a bearing between the inner space 24A and the stator 20. Thus, the motor 1 according to the first embodiment can enhance the heat radiation effect of the stator 20 according to the gas flowing in the inner space 24A.

### [Second embodiment]

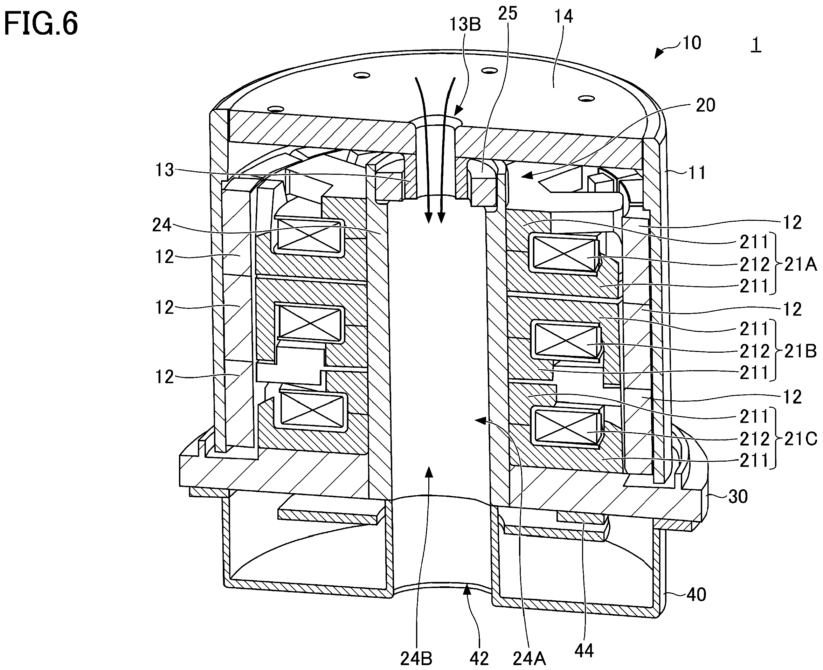

Next, a structure unique to the motor 1 according to the second embodiment will be described with reference to FIG. 6. FIG. 6 is a longitudinal perspective view illustrating an example of the configuration of the motor 1 according to the second embodiment.

As illustrated in FIG. 6, the motor 1 according to the second embodiment has a shorter length in the axial direction of the rotary shaft member 13 than the motor 1 according to the first embodiment. Specifically, the rotary shaft member 13 according to the second embodiment is not different from the rotary shaft member 13 according to the first embodiment in that the rotary shaft member 13 extends from the central portion (on the rotation axis AX) of the coupling member 14 toward the fixing member 30. On the other hand, the rotary shaft member 13 according to the second embodiment is different from the rotary shaft member 13 according to the first embodiment in that the end portion of the rotary shaft member 13 on the side of the fixing member 30 is located substantially at the same position as the end portion of the bearing 25 on the side of the fixing member 30 in the axial direction.

Therefore, as illustrated in FIG. 6, in the motor 1 according to the second embodiment, the rotary shaft member 13 is rotatably supported by one bearing 25. Further, in the motor 1 according to the second embodiment, the bearing 26 is not provided at the end of the insertion member 24 on the side of the fixing member 30. Further, in the motor 1 according to the second embodiment, no component is provided in the inner space 24A (the part on the side closer to the fixing member 30 than the bearing 25) of the insertion member 24.

Thus, in the motor 1 according to the second embodiment, the inner space 24A is directly in communication with the outside of the rotor 10 through the hole 13B of the rotary shaft member 13.

Therefore, in the motor 1 according to the second embodiment, the gas sucked in through the hole 13B of the rotary shaft member 13 flows through the inner space 24A while directly contacting the inner peripheral surface facing the inner space 24A of the insertion member 24, so that the insertion member 24 can be cooled directly from the inside.

Further, in the motor 1 according to the second embodiment, the bearing 26 is not provided at the end of the insertion member 24 on the side of the fixing member 30, and the motor 1 has the opening 24B at the end, and the inner diameter of the opening 24B and the inner diameter of the opening 42 of the case 40 are equal to each other, and, therefore, the gas warmed in the inner space 24A by the heat generated by the stator 20 can be efficiently discharged to the external space through the opening 24B and the opening 42.

### [Third embodiment]

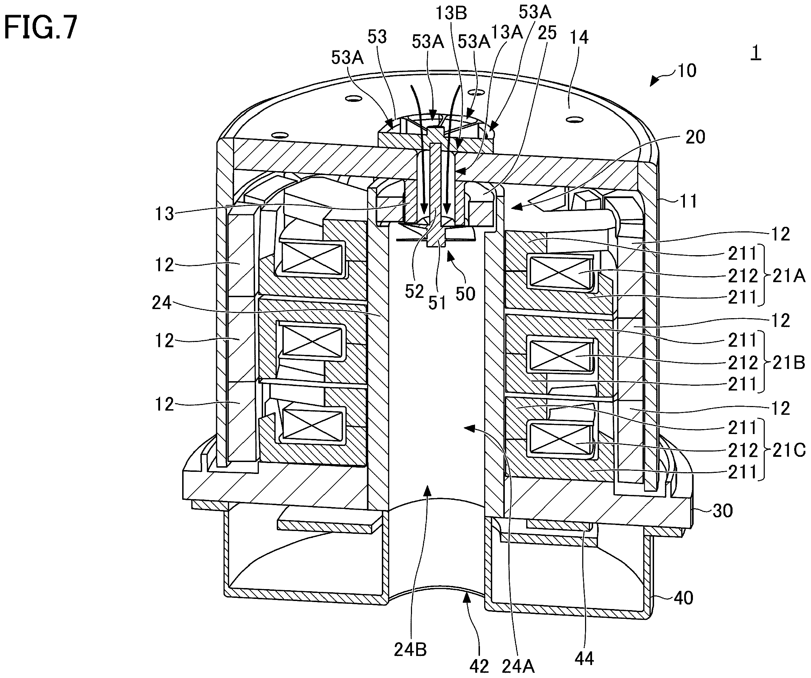

Next, a structure unique to the motor 1 according to the third embodiment will be described with reference to FIG. 7. FIG. 7 is a longitudinal perspective view illustrating an example of the configuration of the motor 1 according to the third embodiment.

As illustrated in FIG. 7, the motor 1 according to the third embodiment differs from the motor 1 according to the second embodiment in that a fan 50 is further provided in the inner space 24A of the insertion member 24. The fan 50 has a rotating blade 51, a rotary shaft 52, and a base part 53.

The rotating blade 51 is provided closer to the fixing member 30 than the end of the rotary shaft member 13 on the fixing member 30 side, in the inner space 24A.

The rotary shaft 52 is a rod-shaped member arranged on the rotation axis AX in the inner space 13A of the rotary shaft member 13. The rotating blade 51 is fixed to an end part of the rotary shaft 52 on the side of the fixing member 30.

The base part 53 is a disc-shaped member and is fixed to a central part on the outer surface of the coupling member 14 so that the center thereof is located at the rotation axis AX. The base part 53 rotatably supports an end part of the rotary shaft 52 on the side of the coupling member 14. The base part 53 is arranged so as to cover the hole 13B of the rotary shaft member 13, but has a plurality of openings 53A so as to introduce outside air into the hole 13B.

In the motor 1 according to the third embodiment, outside air is forcibly sucked in through the hole 13B by rotating the fan 50 integrally with the rotor 10, and the outside air is guided to the inner space 24A of the insertion member 24 through the inner space 13A of the rotary shaft member 13. Thus, compared with the motor 1 according to the second embodiment, the motor 1 according to the third embodiment can increase the flow rate of gas flowing through the inner space 24A of the insertion member 24, thereby further enhancing the cooling effect of the stator 20.

### [Fourth embodiment]

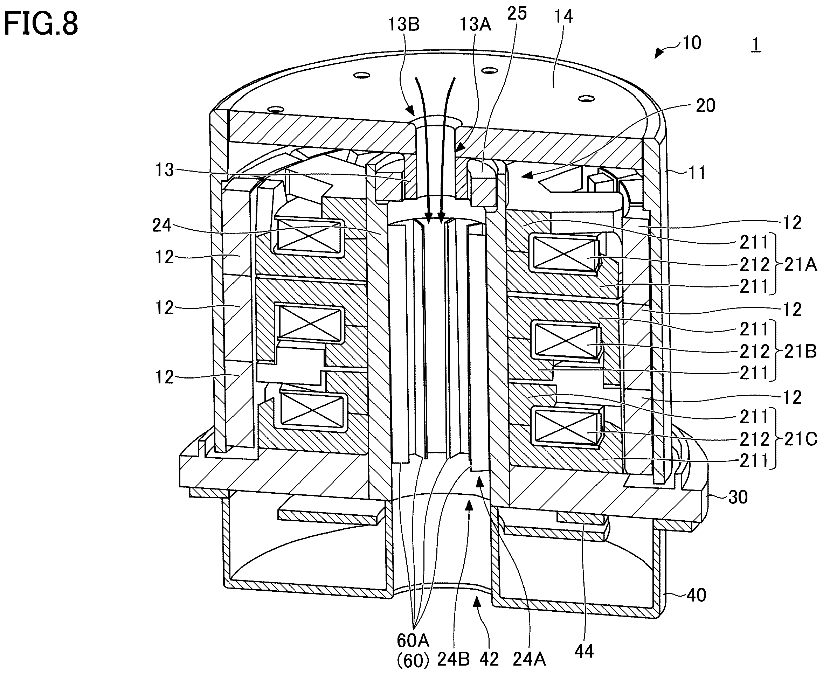

Next, a structure unique to the motor 1 according to the fourth embodiment will be described with reference to FIG. 8. FIG. 8 is a longitudinal perspective view illustrating an example of the configuration of the motor 1 according to the fourth embodiment.

As illustrated in FIG. 8, the motor 1 according to the fourth embodiment is different from the motor 1 according to the second embodiment in that a heat radiation fin 60 is provided on the inner peripheral surface facing the inner space 24A of the insertion member 24.

In the example illustrated in FIG. 8, the heat radiation fin 60 has a plurality of plate-like members 60A standing toward the rotation axis AX from the inner peripheral surface facing the inner space 24A. The plurality of plate-like members 60A are radially arranged around the rotation axis AX. Each of the plurality of plate-like members 60A extends linearly in the axial direction on the inner peripheral surface facing the inner space 24A.

The motor 1 according to the fourth embodiment can expand the surface area of the inner peripheral surface facing the inner space 24A of the insertion member 24, by having the heat radiation fin 60. Therefore, the motor 1 according to the fourth embodiment can enhance the heat radiation effect according to the gas sucked in through the hole 13B and flowing through the inner space 24A, thereby further enhancing the cooling effect of the stator 20.

The heat radiation fin 60 may be integrally formed with the insertion member 24 or may be a separate member from the insertion member 24. The shape, arrangement, and number of the heat radiation fins 60 are not limited to those illustrated in FIG. 8 .

### [Fifth embodiment]

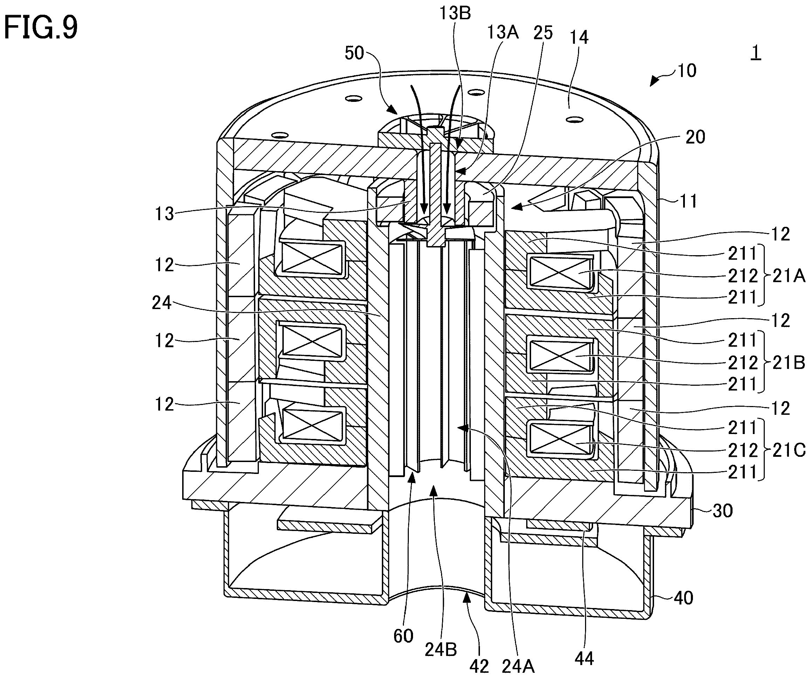

Next, a structure unique to the motor 1 according to the fifth embodiment will be described with reference to FIG. 9. FIG. 9 is a longitudinal perspective view illustrating an example of the structure of the motor 1 according to the fifth embodiment.

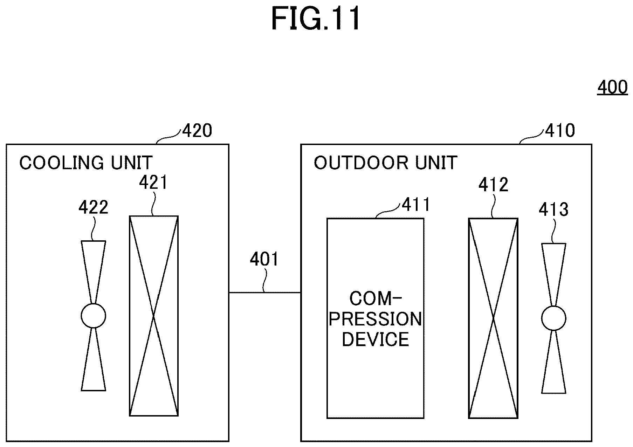

As illustrated in FIG. 11, the motor 1 according to the fifth embodiment has both the fan 50 provided in the motor 1 according to the third embodiment and the heat radiation fin 60 provided in the motor 1 according to the fourth embodiment.

Thus, in the motor 1 according to the fifth embodiment, the fan 50 rotates integrally with the rotor 10 so that the outside air is forcibly sucked in through the hole 13B, and the outside air is guided to the inner space 24A of the insertion member 24 through the inner space 13A of the rotary shaft member 13. Thus, the flow rate of gas flowing through the inner space 24A of the insertion member 24 can be increased in the motor 1 according to the fifth embodiment in comparison with the configuration without the fan 50, and thus the cooling effect of the stator 20 can be further enhanced.

Further, the motor 1 according to the fifth embodiment includes the heat radiation fin 60, and, therefore, the surface area of the inner peripheral surface facing the inner space 24A of the insertion member 24 can be enlarged. Therefore, in the motor 1 according to the fifth embodiment, the heat radiation effect can be enhanced according to the gas sucked in through the hole 13B and flowing through the inner space 24A, and thus the cooling effect of the stator 20 can be further enhanced.

### [Sixth embodiment]

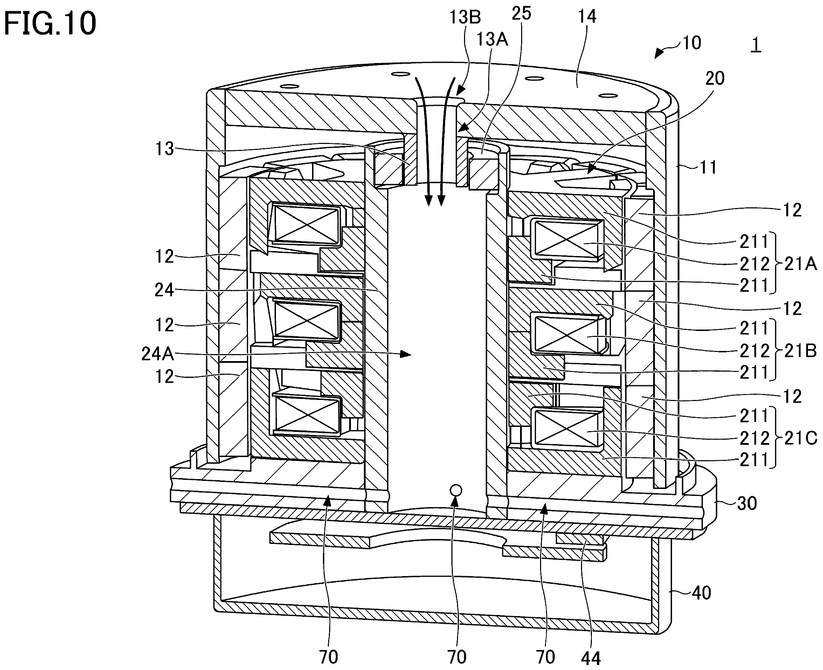

Next, a structure unique to the motor 1 according to the sixth embodiment will be described with reference to FIG. 10. FIG. 10 is a longitudinal perspective view illustrating an example of the structure of the motor 1 according to the sixth embodiment.

As illustrated in FIG. 10, the motor 1 according to the sixth embodiment differs from the motor 1 according to the second embodiment in that no opening 42 is provided in the case 40. Thus, in the motor 1 according to the sixth embodiment, the end portion of the insertion member 24 and the inner space 24A on the side of the fixing member 30 are closed by a surface facing the fixing member 30 of the case 40.

However, as illustrated in FIG. 10, the motor 1 according to the sixth embodiment has a plurality of openings 70 through the fixing member 30 and the insertion member 24 in the radial direction of the rotation axis AX so that the inner space 24A is in communication with the external space of the fixing member 30.

The motor 1 according to the sixth embodiment has a plurality of openings 70, so that the gas sucked in through the holes 13B and warmed by flowing through the inner space 24A can be discharged from each of the plurality of openings 70 to the external space of the fixing member 30. Thus, the motor 1 according to the sixth embodiment makes it difficult for the warmed gas to stay in the inner space 24A, so that the heat radiation effect according to the gas flowing through the inner space 24A can be enhanced.

### [Application example to refrigeration apparatus]

Next, with reference to FIG. 11, an application example of the motor 1 according to the present embodiment to a refrigeration apparatus will be described. FIG. 11 is a diagram illustrating a schematic configuration of a refrigeration apparatus 400 according to the present embodiment.

The refrigeration apparatus 400 illustrated in FIG. 11 is an apparatus for cooling air in a chamber to be cooled (for example, refrigeration apparatuses, freezers, showcases, etc.). As illustrated in FIG. 11, the refrigeration apparatus 400 includes an outdoor unit 410 and a cooling unit 420.

The cooling unit 420 is provided inside the chamber. The cooling unit 420 includes a usage heat exchanger 421 and an in-chamber fan 422 (an example of a "fan apparatus"). The usage heat exchanger 421 cools the air inside a chamber by a flowing refrigerant supplied from the outdoor unit 410 through a piping 401. The in-chamber fan 422 blows the air cooled by the usage heat exchanger 421 into the chamber by rotating the impeller.

The outdoor unit 410 is provided outside the chamber. The outdoor unit 410 includes a compression device 411, an outdoor heat exchanger 412, and an outdoor fan 413 (an example of a "fan apparatus"). The compression device 411 compresses a refrigerant supplied from the cooling unit 420 through the piping 401. As the refrigerant compressed by the compression device 411 flows, the outdoor heat exchanger 412 releases the heat of the refrigerant to the outside air,. The outdoor fan 413 blows the outside air heated by the outdoor heat exchanger 412 by rotating the impeller.

In the refrigeration apparatus 400 according to the present embodiment, the motor 1 of any of the first to sixth embodiments may be used for rotatably driving the impeller provided in the in-chamber fan 422. Thus, the refrigeration apparatus 400 according to the present embodiment can improve the cooling performance of the motor 1 for rotatably driving the impeller provided in the in-chamber fan 422.

In the refrigeration apparatus 400 according to the present embodiment, the motor 1 of any of the first to sixth embodiments may be used for rotatably driving the impeller provided in the outdoor fan 413. Thus, the refrigeration apparatus 400 according to the present embodiment can improve the cooling performance of the motor 1 for rotatably driving the impeller provided in the outdoor fan 413.

### [Functions]

Next, the functions of the motor 1 according to the present embodiment will be described.

The motor 1 according to the present embodiment is provided with the rotor 10 rotatably arranged around the rotation axis AX, and the stator 20 having the claw-pole-type stator unit 21 including the winding wire 212 arranged inside the rotor 10 and wound annularly around the rotation axis AX, and the stator cores 211 provided to surround the winding wire 212, and the stator 20 has the inner space 24A which is in communication with the outside of the rotor 10 around the rotation axis AX and is provided across the heat-transferable insertion member 24 from the stator 20, and which can radiate heat to the inner space 24A.

Thus, the motor 1 according to the present embodiment can radiate heat generated by the stator 20 (the winding wire 212) to the outside of the rotor 10 through the inner space 24A. Therefore, the motor 1 according to the present embodiment can improve the cooling performance of the motor 1, which is an outer rotor type claw-pole motor.

The motor 1 according to the present embodiment may have the bearing 25 (shielding member) for shielding the space where the rotor 10 and the stator 20 face each other and the inner space 24A of the stator 20.

Thus, the motor 1 according to the present embodiment can prevent foreign matter contained in the gas introduced into the inner space 24A, from entering the space where the rotor 10 and the stator 20 face each other, with the bearing 25, while cooling the stator 20 by the gas introduced into the inner space 24A.

In the motor 1 according to the present embodiment, the stator 20 may have three or more stator units 21 stacked in the axial direction of the rotation axis AX.

Thus, the motor 1 according to the present embodiment can radiate the heat generated by each of the three or more stator units 21 to the outside of the rotor 10 through the inner space 24A.

Further, the motor 1 according to the present embodiment may have the rotary shaft member 13 which is rotatably configured around the rotation axis AX and rotates integrally with the rotor 10, and the rotary shaft member 13 may have the hole 13B which allows the outside of the rotor 10 to be in communication with the inner space 24A of the stator 20.

Thus, the motor 1 according to the present embodiment can radiate heat generated by the stator 20 (the winding wire 212) to the outside of the rotor 10 through the inner space 24A and the hole 13B of the rotary shaft member 13.

In the motor 1 according to the present embodiment, the rotary shaft member 13 may include the bearing 25 (one supporting member) provided at one end in the axial direction of the rotation axis AX, the hole 13B provided at one end in the axial direction of the rotation axis AX and rotatably supported by the bearing 26 (one supporting member) provided at the other end in the axial direction of the rotation axis AX, and the opening 13D provided at the other end in the axial direction of the rotation axis AX and allowing the inner space 24A of the stator 20 to be in communication with the external space.

Thus, the motor 1 according to the present embodiment can radiate heat generated by the stator 20 (the winding wire 212) to the outside of the rotor 10 through the inner space 24A, the hole 13B of the rotary shaft member 13, and the opening 13D of the rotary shaft member 13.

In the motor 1 according to the present embodiment, the rotary shaft member 13 is rotatably supported by the bearing 25 (one supporting member) provided at one end in the axial direction of the rotation axis AX, and may include the opening 13D provided at the other end in the axial direction of the rotation axis AX allowing the inner space 24A of the stator 20 to be in communication with external space.

Thus, the motor 1 according to the present embodiment can be configured such that no components are arranged in the inner space 24A of the stator 20, and, therefore, gas flowing in the inner space 24A can be directly brought into contact with the inner peripheral surface facing the inner space 24A of the stator 20, and thus the stator 20 can be directly cooled from the inside.

Further, the motor 1 according to the present embodiment may have the fan 50 arranged in the inner space 24A of the stator 20 and rotated integrally with the rotary shaft member 13.

Thus, the motor 1 according to the present embodiment can increase the flow rate of gas flowing in the inner space 24A of the stator 20 by rotating the fan 50 integrally with the rotary shaft member 13, thereby further enhancing the cooling effect of the stator 20.

Further, the motor 1 according to the present embodiment may include the heat radiation fin 60 on the inner peripheral surface facing the inner space 24A of the stator 20.

Thus, the motor 1 according to the present embodiment can expand the surface area of the inner peripheral surface facing the inner space 24A of the stator 20 by the heat radiation fin 60, thereby further enhancing the cooling effect of the stator 20.

Further, the motor 1 according to the present embodiment includes the fixing member 30 for supporting the stator 20 and the case 40 for housing the drive circuit 44 mounted on the fixing member 30, and is configured to supply power to the winding wire 212, and each of the fixing member 30 and the case 40 may have openings 24B and 42 for allowing the inner space 24A of the stator 20 to be in communication with the external space.

Thus, the motor 1 according to the present embodiment can radiate heat generated by the stator 20 (the winding wire 212) to the external space through the inner space 24A, the opening 24B of the fixing member 30, and the opening 42 of the case 40.

Further, the motor 1 according to the present embodiment includes the fixing member 30 for supporting the stator 20 and the case 40 for housing the drive circuit 44 mounted on the fixing member 30, and is configured to supply power to the winding wire 212, and the fixing member 30 may include the opening 70 for allowing the inner space 24A of the stator 20 to be in communication with the external space of the fixing member 30, by penetrating the fixing member 30 in the radial direction of the rotation axis AX.

Thus, the motor 1 according to the present embodiment can radiate heat generated by the stator 20 (the winding wire 212) to the external space through the inner space 24A and the opening 70.

In the motor 1 according to the present embodiment, the stator core 211 of the stator unit 21 may be a compacted body formed by compressing magnetic powder.

Thus, the motor 1 according to the present embodiment can radiate the heat of the stator core 211, which is easily heated by receiving the heat generated by the winding wire 212 by using the compacted body, to the outside of the rotor 10 through the inner space 24A.

Further, the motor 1 according to the present embodiment may be used to rotatably drive the impeller in a fan apparatus equipped with the impeller that rotates to blow air.

Thus, the motor 1 according to the present embodiment can enhance the heat radiation effect of the motor 1 that rotatably drives the impeller in the fan apparatus.

Further, the refrigeration apparatus 400 according to the present embodiment may be provided with the above-mentioned fan apparatus.

Thus, the refrigeration apparatus 400 according to the present embodiment can enhance the heat radiation effect of the motor 1 that rotatably drives the impeller of the fan apparatus device (for example, the outdoor fan 413, the in-chamber fan 422, etc.) provided in the refrigeration apparatus 400.

### [Modifications/changes]

Although the embodiments have been described above, it will be understood that various changes in modes and details are possible without departing from the purpose and scope of the claims.

### [Modified example of the motor 1]

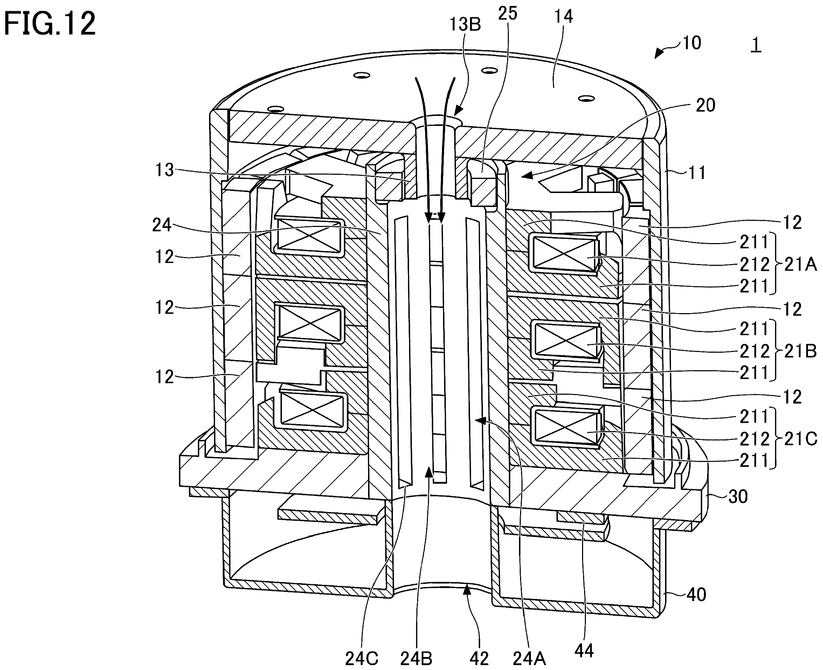

FIG. 12 is a longitudinal perspective view illustrating a modified example of the configuration of the motor 1 according to the second embodiment. The motor 1 illustrated in FIG. 12 is a modified example of the motor 1 illustrated in FIG. 6. The motor 1 illustrated in FIG. 12 differs from the motor 1 illustrated in FIG. 6 in that a plurality of slits 24C are formed in the insertion member 24.

In the example illustrated in FIG. 12, a plurality of the slits 24C extending linearly in the axial direction are formed side by side in the circumferential direction in the insertion member 24. Each of the slits 24C penetrates the insertion member 24 from the inner peripheral surface side to the outer peripheral surface side.

In the motor 1 illustrated in FIG. 12, the insertion member 24 has a plurality of the slits 24C, and, therefore, the inner peripheral surface of the stator core 211 is exposed to the inner space 24A of the insertion member 24 through the plurality of the slits 24C. That is, in the motor 1 according to the present embodiment, the inner space 24A is provided across the stator core 211 of the stator 20.

Therefore, in the motor 1 illustrated in FIG. 12, the gas sucked in through the hole 13B of the rotary shaft member 13 flows through the inner space 24A while directly contacting the inner peripheral surface of the insertion member 24 and the inner peripheral surface of the stator core 211, so that both the stator core 211 and the insertion member 24 can be cooled directly from the inside. Therefore, the motor 1 illustrated in FIG. 12 can further enhance the cooling effect of the stator 20.

The slit 24C is not limited to a shape extending linearly in the axial direction, and may have other shapes. The slits 24C may be arranged not only in the circumferential direction but also in the axial direction. The slits 24C may also be referred to as "through holes".

The present international application is based upon and claims priority to Japanese Patent Application No. 2021-054832 filed on March 29, 2021, the entire contents of which are incorporated herein by reference.

### [Reference Signs List]

1 motor
10 rotor
11, 11A to 11C rotor core
12 permanent magnet
13 rotary shaft member
13A inner space
13B hole
13C through hole
13D opening
14 coupling member
20 stator
21, 21A to 21C stator unit
211 stator core
211A yoke portion
211B claw magnetic pole
211C yoke portion
211D insertion hole
212 winding wire
22 interphase member
22A UV interphase member
22B VW interphase member
23 end member
24 insertion member
24A inner space
24C slit
25, 26 bearing
30 fixing member
40 case
42 opening
44 drive circuit
50 fan
51 rotating blade
52 rotary shaft
53 base part
60 heat radiation fin
60A plate-like member
70 opening
400 refrigeration apparatus
410 outdoor unit
411 compression device
412 outdoor heat exchanger
413 outdoor fan
420 cooling unit
421 usage heat exchanger
422 in-chamber fan
AX rotation axis

## Claims

1. A motor comprising:
a rotor configured to freely rotate around a rotation axis; and
a stator arranged inside the rotor and including a stator unit of a claw-pole type, the stator unit including a winding wire that is annularly wound around the rotation axis and a core provided so as to surround the winding wire, wherein
the stator includes an inner space around the rotation axis and in communication with an outer side of the rotor, such that heat can be radiated to the inner space.

2. The motor according to claim 1, further comprising:
a shielding member configured to shield a space where the rotor and the stator face each other, and the inner space of the stator.

3. The motor according to claim 1 or 2, wherein the stator includes three or more of the stator units that are stacked in an axial direction of the rotation axis.

4. The motor according to any one of claims 1 to 3, further comprising:
a rotary shaft configured to freely rotate around the rotation axis and to rotate integrally with the rotor, wherein
the rotary shaft has a hole that allows the outer side of the rotor to be in communication with the inner space of the stator.

5. The motor according to claim 4, wherein
the rotary shaft is rotatably supported by one supporting member provided on one end in an axial direction of the rotation axis, and one supporting member provided on another end in the axial direction of the rotation axis, and wherein
the rotary shaft has the hole provided on the one end in the axial direction of the rotation axis, and has an opening provided on the another end in the axial direction of the rotation axis that allows the inner space of the stator to be in communication with an external space.

6. The motor according to claim 4, wherein
the rotary shaft is rotatably supported by one supporting member provided on one end in an axial direction of the rotation axis, and
the rotary shaft has an opening provided on another end in the axial direction of the rotation axis that allows the inner space of the stator to be in communication with an external space.

7. The motor according to claim 6, further comprising:
a fan arranged in the inner space of the stator and configured to rotate integrally with the rotary shaft.

8. The motor according to claim 6 or 7, further comprising:
a heat radiation fin arranged on an inner peripheral surface facing the inner space of the stator.

9. The motor according to any one of claims 1 to 8, further comprising:
a fixing member configured to support the stator; and
a case attached to the fixing member to house a drive circuit configured to supply power to the winding wire, wherein
the fixing member and the case each have an opening that allows the inner space of the stator to be in communication with an external space.

10. The motor according to any one of claims 1 to 8, further comprising:
a fixing member configured to support the stator; and
a case attached to the fixing member to house a drive circuit configured to supply power to the winding wire, wherein
the fixing member has an opening that pierces through the fixing member in a radial direction of the rotation axis to allow the inner space of the stator to be in communication with an external space of the stator.

11. The motor according to any one of claims 1 to 10, wherein
the core of the stator unit is formed by using a compacted body formed by compressing magnetic powder.

12. A fan apparatus comprising:
an impeller configured to blow air by rotating; and
the motor according to any one of claims 1 to 11 configured to rotatably drive the impeller.

13. A refrigeration apparatus comprising:
the fan apparatus according to claim 12.
